# EUROPEAN PATENT APPLICATION

(11) **EP 1 043 277 A1**
(43) Date of publication of application: **11.10.2000**
(21) Application number: 99201083.5
(22) Date of filing: 09.04.1999
(51) Int. Cl.: C03B 23/023, D04B 1/00

(54) **A knitted fabric with different front and back outer surfaces**

(71) Applicant: N.V. BEKAERT S.A., 8550 Zwevegem (BE)
(72) Inventor: van Steelandt, Wim, 9100 Sint-Niklaas (BE)
(74) Representative: Messely, Marc, Ir.

(57) **Abstract**

A covering material, resistant to high temperature and intended to be inserted between tools and plates of hot glass, e.g. during bending operations, wherein said covering material comprises a knitted fabric, characterised in that said knitted fabric has a front outer surface and a back outer surface, said knitted fabric is provided by a knitting structure in which two different yarn groups are applied in such a way that on said front outer surfaces of said knitted fabric, mainly one said yarn group is visible providing mechanical resistance to said knitted fabric, and on said back outer surfaces of said knitted fabric, mainly the other said yarn group is visible, providing thermal insulation to said knitted fabric.

## Description

### Field of the invention.

The invention relates to a covering material, resistant to high temperatures and intended to be inserted between tools and plates of hot glass during glass bending operations.

### Background of the invention.

Various covering materials have been proposed in the literature. In EP0312439, covering materials based on metal fibers were described. In FR2739616, improvements to this covering material were proposed by using special knitting techniques to provide sufficient air permeability to the covering material and to decrease the risk on marking of the bent glass, caused by the contact of the glass and the covering material.

### Summary of the invention.

Basically, the demands for a covering material are threefold: it should be heat-resistant, it should be resistant to mechanical actions, caused by the glass coming into contact with the material, e.g. by pressing, and it should prevent glass from being "spontaneously tempered", due to insufficient thermal insulation.

The first requirement, being heat-resistant, is provided by the choice of the fiber material. Fibers made out of metal, e.g. stainless steel, glass, ceramics, SiC, para-aramid, meta-aramid, basalt, carbon, preox, poly(p-phenylene-2,6-benzobisoxazole) or polybenzimidazole can be applied, depending on the temperature which against the product has to be resistant.

The second requirement, being resistant to mechanical action, means that the knitted fabric has to be resistant to repetitive contacts of hot glass plates on its surface. This means that the fabric should be resistant against forces perpendicular to its surface, caused by these contacts. To provide this mechanical resistance to the knitted fabric, the yarns present at the outer side contacting the hot glass plate, should be mechanically resistant to forces, applied in radial direction to the yarn.

With spontaneously tempered is meant that the glass cools down on the spots where it comes into contact with a colder object, because heat is drained away from the glass by the colder object. This locally cooling causes stresses in the glass, which can lead to breakage of the glass during further processing or use.

The invention provides a covering material which meets all of the three above-mentioned requirements. This is done by separating the mechanical resistance function from the thermal resistance function. Two different yarn groups are used. The yarn group which is mainly visible on the front outer side of the knitted fabric is meant to come into contact with the hot glass plate, and provides mechanical resistance to the fabric. On the back outer side of the knitted fabric, which comes into contact with the tool to be covered, mainly the other yarn group providing thermal insulation to the knitted fabric is visible.

With yarn groups is meant a combination of yarn clusters, being knitted in such a way that they provide one outer side of the knitted fabric. A yam cluster is a set of individual yarns, which are knitted together throughout the whole fabric. They act, so to say, as twin yams.

Each yarn group comprises individual yarns, the combination of which provides sufficient mechanical resistance (for the group contacting the glass plate) or thermal insulation (for the group contacting the tool) to the knitting fabric. Each yarn can be made out of one fiber material, or can be a blend of two or more different fiber materials.
With blend is meant that different fibers are intimately blended and used to provide a single yarn, which is eventually plied, or a multi-plied yarn, consisting of different single yarns, each single yarn comprising one or more different fiber materials.

Yarns can be spun by techniques, known to the art, or it can be multifilament yarns.

The yam group, providing to the knitted fabric a front outer side with sufficient mechanical resistance under the used temperature, is advantageously provided by metal fibers. An alternative to the metal fibers are poly(p-phenylene-2,6-benzobisoxazole) fibers, better known as PBO-fibers. Also a blend of both fibers, can be used to provide a knitted fabric as subject of the invention .
An alternative to provide the knitted fabric's front outer side is the use of metal fiber yarns and PBO-fiber yarns in the same yam group.

When the mechanical actions to be withstood are moderate, or when lower application temperatures are applied, also blends of metal fibers and/or PBO-fibers with glass fibers, basalt fibers, ceramic fibers, carbon fibers, SiC fibers, preox-fibers, para-aramid fibers, meta-aramid fibers or polybenzimidazole fibers can be used to provide the front outer side of the knitted fabric.

All types of metal fibers can be used. Usually, but not necessarily, stainless steel fibers are used. Alloys such as AISI 316 or AISI 316L, AISI 347, or other alloys out of the AISI 300 type are used. Also alloys out of the AISI-400 type, Aluchrome-type alloys or alloys as described in US-4597734 can be used. These fibers can be bundle drawn, as described in patent US-A-3379000, or can be made by shaving them from a coil, as described in patent US-A-4930199 or can be melt extracted. Also metal fibers produced as described in JP 62260018 can be used.

The yarn group, providing the thermal insulation to a back outer side under the used temperature, is provided by applying glass fibers, basalt fibers, ceramic fibers, carbon fibers, SiC fibers, PBO-fibers, preox-fibers, para-aramid fibers, meta-aramid fibers or polybenzimidazole fibers, or a blend of two or more of these fibers. The presence of these yarn group at the back outer side of the fabric limits the heat which is drained away from the hot glass plate by its contact with the covering material, and so minimizes the spontaneously tempering action.

As can be noticed, yarn groups providing mechanical resistance and yarn groups providing thermal insulation are most likely to be of a different nature. Yam groups providing thermal insulation may not have enough mechanical resistance to withstand the mechanical forces caused by the impact of the hot glass plate on its surface. Therefore, and as subject of the invention, the yarn group providing mechanical resistance should be mainly visible on the front side of the knitted fabric. This to prevent the yarn group providing thermal insulation to be contacted by hot glass plates . The better preferred covering materials are knitted fabrics where only the yam group providing mechanical resistance to the knitted fabric is visible on the front outer surface.

To provide the best thermal insulation to the covering material, it is part of the invention that on the back outer side mainly the yarn group which provides thermal insulation is visible. If so, the risk of making contact between the tool and the mechanical resistant yarn group, which does not necessarily have the same thermal insulation properties, is reduced to a minimum.

To obtain a front and back outer surface as part of the invention, it is best that the ratio of volume of the yarn group providing the front outer side to total yarn volume of the knitted fabric, is situated between 0.2 and 0.8, preferably between 0.25 and 0.75 and best between 0.3 and 0.7.

If the volume ratio is chosen very carefully between these limits in combination with the knitting structure and yarn properties such as bulkiness, it is even possible to provide a knitted fabric as subject of the invention, on which only the yam group providing mechanical resistance is visible on the front outer side, whereas on the back outer side mainly the other yarn group is visible.

Different knitting structures can be used to provide a knitted fabric as subject of the invention. However, best results are obtained by using double bed structures, either warp or weft knitted structures.

In case of single bed structures, the plating technique, as known in the art, can be used to provide a front and a back outer side to the knitted fabric, each provided by its own yarn group. Different knitting structures, such as single bed weft knitting structures or single bed warp knitting structures can be applied using plating techniques.
Attention should be paid to the volume ratio of the yam group providing the front outer surface to the total yarn volume of the fabric, since this technique does not prevent a yam group, physically being present at one side of the fabric, being visible on both sides, when volume ratios are not chosen carefully.
To limit elasticity of the knitted fabric, a structure using tuck stitches or inlay yarns can be chosen.

Since marking on the glass sheet during contact of hot glass pates and knitted fabric are to be avoided the front outer surface of the knitted fabric coming into contact with the hot glass plate should preferably be a so called "right side", in case of weft knitted fabrics, or a so called "technical face side", in case of warp knitted fabrics. With "right side" and "technical face side" is meant a side of the knitted fabric on which the legs of the stitches, forming this side of the fabric can be seen.

In case of a double bed knitted structure, a knitted fabric with two right sides, in case of a weft knitted fabric, or two technical face sides, in case of a warp knitted fabric may be provided. One of these sides of the fabric is used to provide the front outer side of the knitted fabric, provided by a yarn group offering the mechanical resistance to the knitted fabric. In case a single bed knitted fabric, there is always a right and a reverse side, in case of weft knitted fabrics, or a technical face and a technical back side in case of a warp knitted fabric. It is to be preferred to use the right or technical face side of the fabric as the front outer side, provided by a yam group offering the mechanical resistance to the knitted fabric.

Other properties of the covering materials are flexibility and permeability to transversal air flow.
Both properties can be provided using a knitting structure, either warp or weft knitting structure, which provides openings to the knitted fabric.

E.g. in case of a warp knitting structure, comprising different stitch wales, these openings can be obtained by alternating portions of stitch wales, which are connected to adjacent wales by mutual transfer of stitches, and portions of stitch wales where no connection to other wales are made. The number of stitches in each portion can be chosen, as well as the number of stitches which are transferred. This to provide openings with different shapes. Also different opening shapes can be made over the surface of the knitted fabric, providing a variety of flexibility or air permeability to the different zones in the knitted fabric.

Other warp knitting techniques, such as inlay yarns or fall plate techniques are applicable to obtain stitch wales, partially locked to each other

To provide a knitted product as subject of the invention, one known in the art can notice that both yarn groups basically follow the same course in the fabric, the first yarn on the front outer surface, the second on the back outer surface. An extra advantage of these structures is that, when such a knitted fabric is used as a covering material, the hot glass comes into contact of the front outer side. During use, it will be this yarn group that breaks first. When this yarn group has broken, the covering material will still be able to continue its separation function, until the yarn group of the back outer side breaks. This means that the life time of such a knitted fabric as subject of the invention will be longer as compared to a knitted fabric, used as covering material, using a yarn group to provide both front and back outer side. When for this latter knitting structure, the yarn group breaks, its separation function is lost since there is no layer left to cover the tooling. This advantage is obtained to a larger extend using double bed knitted structures.

### Brief description of the drawings.

The invention will now be described into more detail with reference to the accompanying drawings wherein
- FIGURE 1 is a view of a warp knitted fabric.
- FIGURE 2 is a schematic view of a detail of a knitting structure.

### Description of the preferred embodiments of the invention.

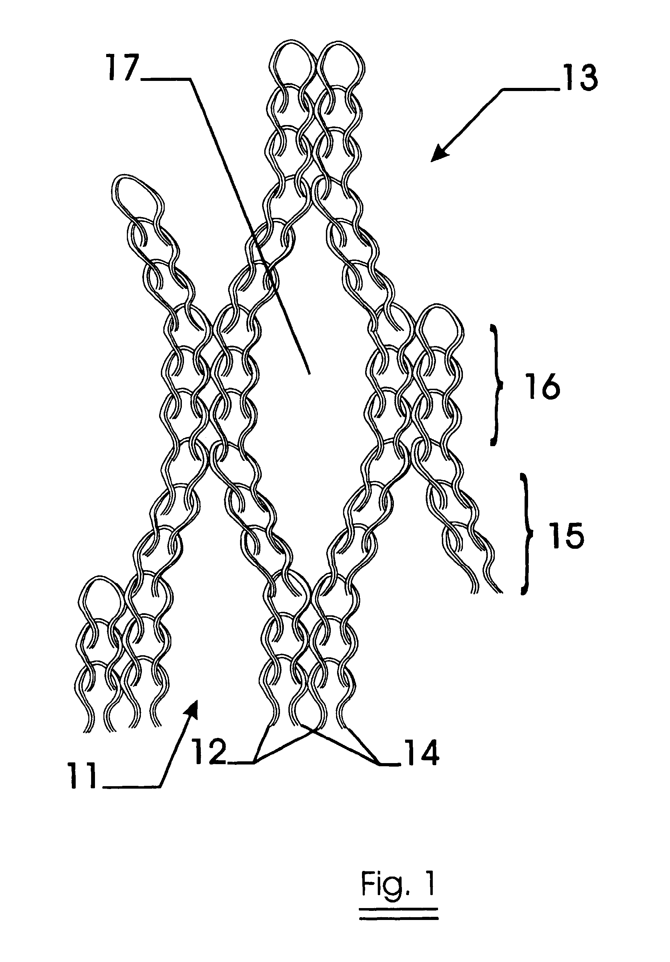

A preferred embodiment of the invention is a double bed warp knitted structure, of which a view is shown in figure 1. On the front outer side 11, mainly the yam group providing mechanical resistance 12 is visible. On the other outer side, the back outer side 13, mainly the yam group providing thermal insulation 14 is visible. Figure 1 shows clearly how stitch wale portions 15, without connections to adjacent stitch wales, are alternated by stitch wale portions 16, in which a mutual transfer of stitches from one stitch wale to an other stitch wale is applied. This alternation provides openings 17 to the knitted fabric.

The number of stitches in stitch wale portions 15 and 16 can be chosen, and this to change shape and surface of the openings 17, so changing the air permeability of the knitted fabric. Different number of stitches can be chosen over the surface of the knitted fabric, to obtain different air permeability's on different zones of the knitted fabric.

An example of such a double bed warp knitted fabric has in total 2 stitches in the stitch wale portions 15, one at each outer side of the knitted fabric, and having in total 12 stitches in the stitch wale portions 16, 6 stitches on each outer side of the fabric, 3 stitches in each stitch wale.

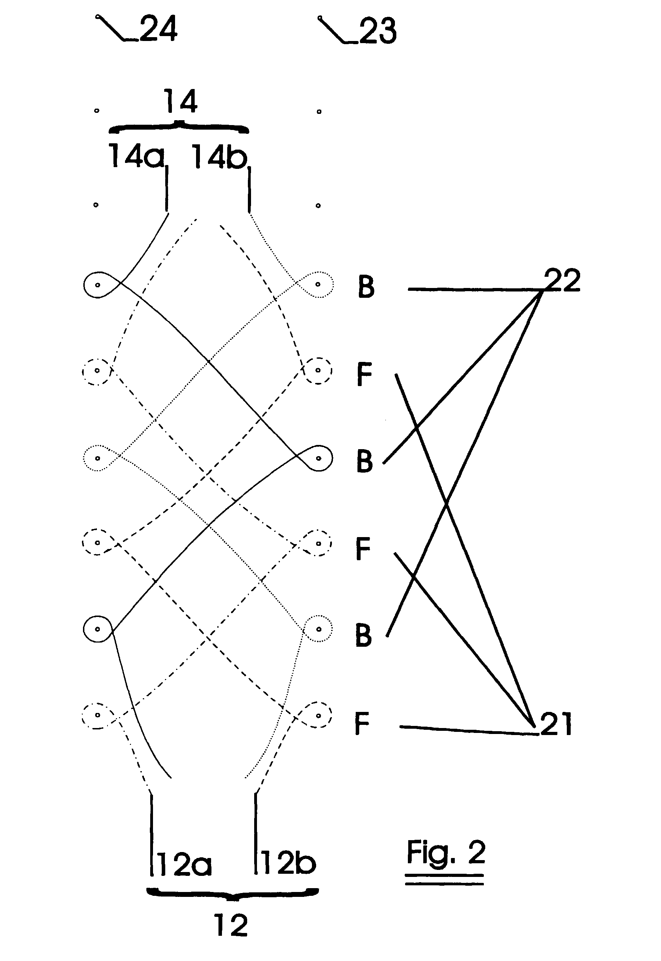

A detail of a schematic view of the knitting structure as used, is given in figure 2. It is a schematic view of a stitch wale portion 16. Here can be seen that yarn group 12, being visible at the front outer side of the fabric, is only knitted on the needles of the front needle bed 21, whereas the yarn group 14, being visible at the back outer side of the knitted fabric, in only knitted on the needles of the back needle bed 22. It is clear that here the mutual transfer of stitches between stitch wales can be seen. Yams of yarn group 12, after having made a stitch in stitch wale 23, are transferred to stitch wale 24, where they make a stitch on its turn. At the same time, other yams of yarn group 12, after having made a stitch in stitch wale 24, are transferred to stitch wale 23, where they make a stitch on its turn. The same happens with yarns of yarn group 14.

To provide the knitted fabric, two different yarn groups were applied. As shown in figure 2, each yarn cluster 12a or 12b, being part of the yam group 12, is provided by 2 spun yams, being knitted together to form stitches. These spun yarns are metal fibers spun yarns, e.g. a 2-plied yarn with a metrical number of 5.5. Preferably, fibers of 12µm diameter of the alloy AISI 316L are used to provide the spun yarns.

Each yarn cluster 14a or 14b, being part of the yarn group 14, is provided by a para-aramid spun yarn, e.g. a 4-plied yarn with a metrical number of 7.
The volume ratio of yarn group 16 to the total yam volume is 0.34.

It must be clear that using transfer of stitches is one technique to connect different stitch wales to each other locally. Other techniques such as inlay yarns or fall plate techniques are also applicable to obtain stitch wales, locally connected to each other.
An alternative to the yarn group providing the mechanical resistance, are PBO-fiber yarns or metal fibers out of a different alloy, such as e.g. AISI 300- or 400-type stainless steel alloys. It should be clear to a person skilled in the art, that other material combinations are in the scope of the invention.

Other alternatives can be obtained by using similar knitting structures on a single bed warp knitting machine. Even more, also knitting structures on weft knitting machines, providing a knitting structures with two yarn groups, each being mainly visible at one outer side of the fabric, and providing the necessary openings to the knitted fabric, can be an alternative for the proposed embodiment.

It should be clear that different machine gauges can be used to provide alternative embodiments, e.g. machine gauges between 5 and 32. Also fabric properties such as thickness, weight, density and air permeability can be choosen in a wide range. Thicknesses between 0.1 cm and 1 cm can be obtainde, and weights up to 2 kg/m² are possible.

## Claims

1. A covering material, resistant to high temperatures and intended to be inserted between tools and plates of hot glass, wherein said covering material comprises a knitted fabric, characterised in that said knitted fabric has a front outer surface and a back outer surface, said knitted fabric is provided by a knitting structure in which two different yarn groups are applied in such a way that on said front outer surfaces of said knitted fabric, mainly one said yarn group is visible providing mechanical resistance to said knitted fabric, and on said back outer surfaces of said knitted fabric, mainly the other said yarn group is visible, providing thermal insulation to said knitted fabric.

2. A covering material according to claim 1, wherein the ratio of volume of yarn group providing said front outer surface to the total yarn volume providing said knitted fabric is between 0.2 and 0.8 .

3. A covering material according to claim 1 to 2, wherein at said front outer surface of said knitted fabric, only said yarn group is visible which provides the mechanical resistance to said knitted fabric.

4. A covering material according to claim 1 to 3, wherein said knitted fabric is a double bed knitted fabric.

5. A covering material according to claim 1 to 4, wherein the yam group providing said front outer surface comprises poly(p-phenylene-2,6-benzobisoxazole) fibers.

6. A covering material according to claim 1 to 4, wherein the yarn group providing said front outer surface comprises metal fibers.

7. A covering material according to claim 6, wherein said metal fibers are stainless steel fibers.

8. A covering material according to claim 1 to 7, wherein said knitted fabric is a warp knitted fabric.

9. A covering material according to claim 1 to 8, wherein said knitted structure provides openings in said knitted fabric.

10. Use of a covering material according to any of the proceeding claims, to contact hot glass plates during glass heating, bending or tempering process.
